Europäisches Patentamt

European Patent Office

Office européen des brevets

(11) Veröffentlichungsnummer: **0 019 594 B1**

# EUROPÄISCHE PATENTSCHRIFT

(45) Veröffentlichungstag der Patentschrift: 25.11.81

(51) Int. Cl.³: **B 01 J 2/10, B 01 J 2/16**

(21) Anmeldenummer: 80810165.3

(22) Anmeldetag: 21.05.80

(54) Einrichtung für die Bildung von Granulaten oder Agglomeraten.

(30) Priorität: 21.05.79 CH 4721/79

(43) Veröffentlichungstag der Anmeldung: 26.11.80 Patentblatt 80/24

(45) Bekanntmachung des Hinweises auf die Patenterteilung: 25.11.81 Patentblatt 81/47

(84) Benannte Vertragsstaaten: AT BE FR GB IT NL

(56) Entgegenhaltungen:
FR-A-2 075 523
GB-A-968 633
GB-A-1 027 375
US-A-4 027 624

(73) Patentinhaber: Glatt Maschinen- und Apparatebau AG, Kraftwerkstrasse 3, CH-4133 Pratteln (CH)

(72) Erfinder: Grab, Erwin, Friedrich Neffstrasse 16, D-7851 Rümmingen (DE)
Erfinder: Glatt, Werner, D-7851 Binzen (DE)

(74) Vertreter: Eder, Carl E. et al, Patentanwaltsbüro Eder & Cie Münchensteinerstrasse 2, CH-4052 Basel (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Einrichtung für die Bildung von Granulaten oder Agglomeraten

Die Erfindung betrifft eine Einrichtung gemäß dem Oberbegriff des Anspruchs 1.

Aus der schweizerischen Patentschrift 444 046 und der entsprechenden US-Patentschrift 3 394 468 sowie aus der schweizerischen Patentschrift 475 786 sind Wirbelschicht-Trockner bekannt, die einen Behälter für das zu trocknende Gut aufweisen. Der Boden des Behälters ist mit Öffnungen versehen. Der sich über dem Behälter befindende Raum enthält ein Filter und ist mit einem Sauggebläse verbunden. Beim Betrieb wird unter dem Behälter-Boden warme Luft zugeführt, und diese mittels des Sauggebläses durch den Behälter und das sich darin befindliche, körnige Gut hindurchgesaugt. Dabei wird das Behandlungsgut aufgewirbelt. Zum Granulieren wird durch mindestens eine oben im Behälter angeordnete Sprühdüse im Wirbelraum eine Flüssigkeit zersprüht. Dadurch wird diese Flüssigkeit mit dem aufgewirbelten körnigen Gut vermischt und ein Granulat oder Agglomerat gebildet. Um dieses zu trocknen, wird nach der Beendigung des Besprühvorganges noch während einer gewissen Zeitdauer warme Luft durch das Granulat oder Agglomerat hindurchgesaugt. Wenn das Sauggebläse auch ausgeschaltet wird, setzt sich das Granulat wieder im Behälter ab. Dieser kann dann aus dem Gestell der Einrichtung ausgefahren, entleert und mit neuem Behandlungsgut gefüllt werden. Das zu behandelnde körnige Gut besteht häufig aus einem Gemisch von verschiedenen Feststoffen. Die aus verschiedenen Feststoffen bestehenden Körner haben im allgemeinen unterschiedliche Dichten und eventuell auch verschiedene Größen. Dies hat zur Folge, daß beim Aufwirbeln eine gewisse Fraktionierung stattfindet. Das beim Besprühen der aufgewirbelten Körner gebildete Granulat wird dann inhomogen, was einen erheblichen Nachteil darstellt.

Aus den deutschen Auslegeschriften 2 341 504 sowie 1 937 424 und den deutschen Offenlegungsschriften 2 643 121, 2 551 578 sowie 2 418 552 sind Granulier-Vorrichtungen und eine Vorrichtung zum Überziehen von Feststoffteilchen bekannt, die ähnlich ausgebildet sind wie die bereits beschriebenen Wirbelschicht-Trockner und zum Teil zusätzlich noch einen im Behälter angeordneten, drehbaren Rührer oder Zerhacker aufweisen. Auch bei diesen vorbekannten Vorrichtungen wird das zu beandelnde Gut aufgewirbelt und im Wirbelraum mit einer Flüssigkeit besprüht. Daher haben auch diese Vorrichtungen, gleich wie die vorher beschriebenen Vorrichtungen, den Nachteil, daß beim Aufwirbeln und Besprühen eines Gemisches eine gewisse Fraktionierung und Entmischung stattfinden kann.

Dieser Nachteil wurde bisher dadurch behoben, daß man die zu mischenden Feststoffe zuerst in trockenem Zustand in einem Mischer vermischt. Dieses Gemisch wird dann in einer Siebvorrichtung gesiebt und in einen Mischkneter gebracht, dem ebenfalls die zur Granulatbildung erforderliche Flüssigkeit zugeführt wird. Danach werden das puderförmige Gemisch und die Flüssigkeit im Mischkneter mit Rührern gerührt und geknetet. Die so gebildete, feuchte Masse wird dann in eine Granulierpresse transportiert, in der die feuchte Masse durch eine Siebplatte hindurch gepreßt wird. Das dabei gebildete, stäbchenförmige Material wird dann in den Mischbehälter eines Wirbelschichttrockners eingefüllt und im letzten mit warmer Luft getrocknet und mehr oder weniger zerbröckelt. Wenn das Material getrocknet und zerbröckelt ist, wird es aus dem Trockner herausgenommen, in eine separate Siebvorrichtung transportiert und in dieser nochmals gesiebt. Das so gebildete Granulat kann dann beispielsweise einer Tablettiermaschine zugeführt und in dieser zu Tabletten gepreßt werden.

Dieses Verfahren ergibt zwar ein Granulat mit homogener Zusammensetzung, hat jedoch den Nachteil, daß beim Hindurchpressen durch die Siebplatte der Granulatpresse Teilchen mit einer regelmäßigen zylindrischen Form und mit verfestigten, zylindrischen Flächen gebildet werden, die nachher die Tablettierung erschweren. Ein weiterer Nachteil besteht darin, daß zur Bildung des Granulates eine verhältnismäßig große Anzahl separater Vorrichtungen erforderlich ist und daß die Zwischenprodukte dann jeweils durch das Arbeitspersonal von einer Vorrichtung zur anderen gebracht werden müssen.

Aus der deutschen Offenlegungsschrift 2 538 267 ist nun bereits eine Granulier-Vorrichtung bekannt, um zur Granulatbildung dienende Komponenten in einem Behälter zuerst trocken zu mischen und anschließend unter Zugabe einer Flüssigkeit unter fortgesetzter Mischung im gleichen Behälter zu granulieren sowie mit einem Luftstrom zu trocknen. Zum Mischen ist im Behälter ein um eine vertikale Achse drehbares Mischwerkzeug vorhanden. Die zum Trocknen dienende Luft kann durch einen im oberen Bereich des Behälters in diesen mündenden Stutzen sowie durch die Welle des Mischwerkzeuges hindurch in den Behälter eingeleitet werden. Diese Weise der Luftzufuhr ergibt jedoch nur eine relativ geringe und ungleichmäßige Aufwirbelung des Mischgutes und eine entsprechend kleine Trocknungswirkung. Da das Mischgut ja nach oben gewirbelt werden soll, ist nämlich die von oben her eingeleitete Luft vergleichsweise wenig wirksam. Weil ferner die von unten her zugeführte Luft durch die Welle des Mischwerkzeuges hindurch in den Behälter eingeleitet wird, ist diese Luft nur über einen kleinen Bereich des Behälterbodens zur Verwirbelung wirksam. Zudem kan nur eine verhältnismäßig kleine Luftmenge pro Zeiteinheit durch die Welle hindurchgeleitet werden.

Die Erfindung hat sich nun zur Aufgabe gestellt, eine Einrichtung zu schaffen, mit der im gleichen Behälter Feststoffe mit einer Flüssigkeit gemischt und granuliert bzw. agglomeriert sowie getrocknet werden können, wobei keine Entmischung stattfinden soll und alle Arbeitsoperationen mit hohem Wirkungsgrad durchführbar sein sollen.

Diese Aufgabe wird durch eine Einrichtung der einleitend genannten Art gelöst, wobei die Einrichtung gemäß dem Anspruch 1 gekennzeichnet ist.

Weitere zweckmäßige Ausgestaltungen der Erfindung ergeben sich aus den abhängigen Ansprüchen.

Die Erfindung wird nun anhand der Zeichnung dargestellter Ausführungsbeispiele erläutert. In der Zeichnung zeigen die

Figur 1 einen schematischen Vertikalschnitt durch eine Einrichtung für die Bildung von Granulaten oder Agglomeraten, die

Figur 2 einen Schnitt entlang der Linie II-II der Figur 1, wobei der Misch-Behälter weggelassen wurde, die

Figur 3 einen Schnitt entlang der Linie III-III der Figur 2 wobei auch noch ein Teil des Misch-Behälters gezeichnet wurde, die

Figur 4 einen der Figur 3 entsprechenden Schnitt, wobei aber an den öffnungslosen Boden anstelle des Bodens mit den Öffnungen für die Gaszufuhr der als Passier-Sieb ausgebildete Boden angefügt ist, und die

Figur 5 eine Seitenansicht einer Variante der Einrichtung.

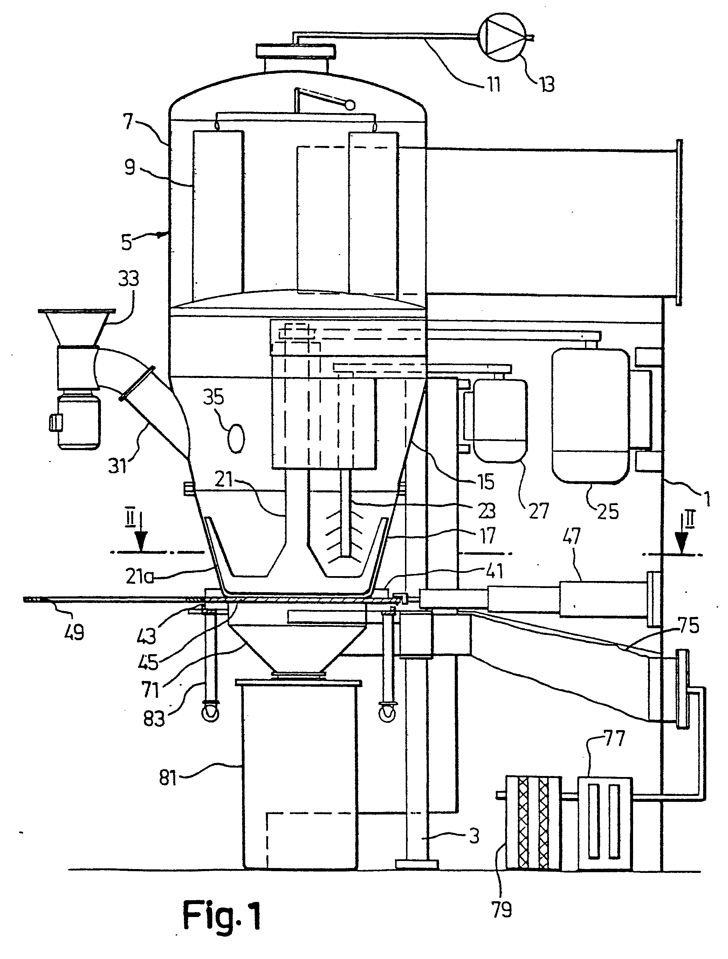

Die in der Figur 1 ersichtliche Einrichtung zur Kornvergrößerung, d. h. zur Bildung von Granulaten oder Agglomeraten, weist ein Gestell 1 mit Säulen 3 auf. Im Gestell ist ein mehrteiliger Behälter 5 mit einer vertikalen Achse angeordnet. Der obere Behälterteil 7 enthält ein mehrteiliges Filter 9 und ist durch eine Leitung 11 mit einem schematisch angedeuteten Sauggebläse 13 verbunden. Unter dem Behälterteil 7 befindet sich ein sich nach unten konisch verjüngender Behälterteil 15, an dem unten ein sich ebenfalls konisch nach unten verjüngender Behälterteil 17 anschließt. Wie noch näher erläutert wird, dient der Innenraum des Behälterteiles 17 während einer gewissen Arbeitsphase als Mischkammer. Während einer andern Arbeitsphase dienen die Innenräume der Behälterteile 15 und 17 zusammen als Wirbelkammer.

In den beiden Behälterteilen 15 und 17 ist ein Rührer 21 angeordnet, dessen Welle koaxial zur Symmetrieachse des Behälters 5 drehbar gelagert ist. Der Rührer weist Rührarme 21a auf, deren Freie Enden nach oben abgewinkelt sind und mit geringem Abstand entlang der Innenfläche des Behälterteiles 17 verlaufen. In den beiden Behälterteilen 15 und 17 ist ferner noch ein Zerhacker 23 angeordnet, der ebenfalls um eine vertikale Achse drehbar gelagert ist, die aber gegen die Behälter-Symmetrieachse versetzt ist. Der Rührer 21 und der Zerhacker 23 sind durch Riemengetriebe mit je einem Motor 25 bzw. 27 verbunden.

Der Behälterteil 15 weist einen verschließbaren Einlaß-Stutzen 31 für die Zufuhr des zu behandelnden, pulverförmigen Gutes auf. Am Einlaß-Stutzen 31 ist eine Sieb-Vorrichtung 33 mit einer durch einen Motor angetriebenen Siebtrommel angeflanscht. Ferner ist der Behälterteil 15 mit einem verschließbaren Einlaß 35 zum Zuführen eines flüssigen Gutes versehen.

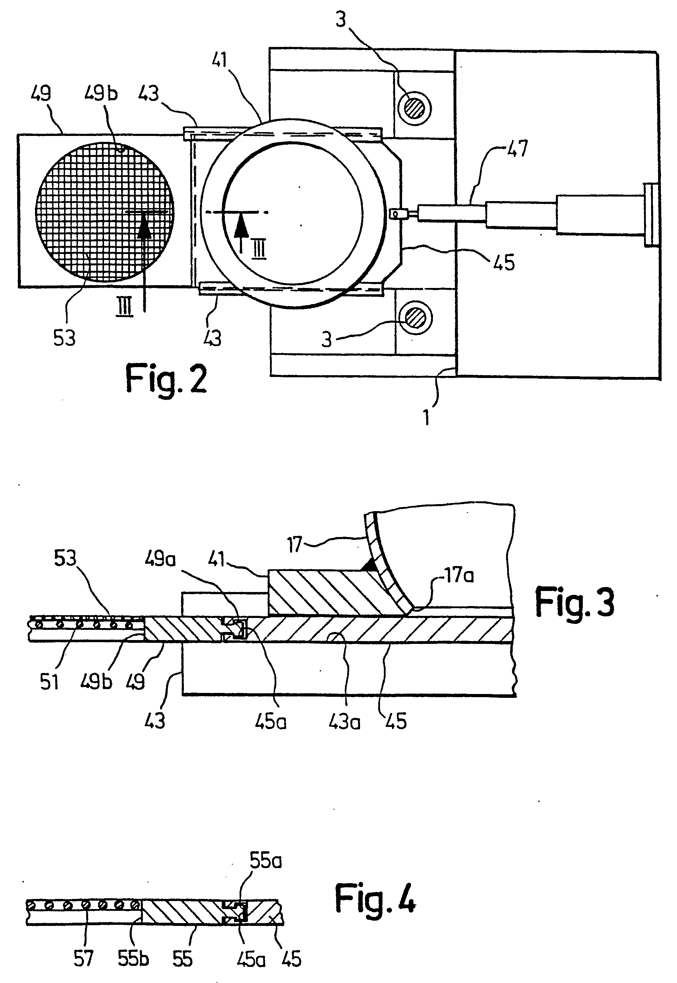

Der Behälterteil 17 ist unten mit einer Öffnung 17a versehen und an seinem unteren Rand ist ein besonders deutlich in den Figuren 2 und 3 ersichtlicher Ring 41 angeschweißt.

Beidseitig des unteren Randes des Behälterteiles 17 ist je eine horizontal verlaufende Führung 43 mit einer Nut 43a am Behälterteil 17 befestigt. In den Nuten 43a ist ein Boden 45 verschiebbar geführt. Dieser Boden ist durch eine kompakte Platte gebildet und weist mindestens in demjenigen Bereich, der sich in der in den Figuren 1, 2 und 3 gezeichneten Stellung unter der Öffnung 17a befindet, keine Durchgangs-Öffnungen auf. Der Boden 45 ist im übrigen so geführt, daß er in der gezeichneten Stellung die Öffnung 17a dicht abschließt. Der Boden 45 kann mittels eines Verstellorgans 47, das einen am Gestell 1 befestigten Hydraulikzylinder und einen lösbar mit dem Boden 45 verbundenen Kolben aufweist, entlang den Führungen 43 verschoben werden.

Der Boden 45 ist an seinem quer zu seiner Verschieberichtung verlaufenden, dem Verstellorgan 47 abgewandten Rand mit einer Nut 45a versehen, deren Bodenteil verbreitert ist. Ein Boden 49 ist an seinem einen Rand mit einer im Querschnitt T-förmig vorstehenden Rippe 49a versehen, die in die Nut 45a eingreift. Dadurch werden die beiden Böden 45 und 49 in der Verschieberichtung des Verstellorganes 47 unverschiebbar miteinander verbunden. Die beiden Böden 45 und 49 können ausgehend von der in den Figuren 1, 2 und 3 gezeichneten Stellung so weit nach links verschoben werden, daß die Nut 45a aus dem Bereich der Führungen 43 herausgelangt. In dieser Stellung kann man die Rippe 49a des Bodens 49 quer zu den Führungen 43 aus der Nut 45a herausschieben und die beiden Böden 45, 49 dadurch voneinander trennen.

Der Boden 49 ist mit einer Öffnung 49b versehen, die ungefähr gleich groß ist wie die Öffnung 17a. In dieser Öffnung ist ein relativ grobmaschiges, stabiles Traggitter 51 und ein sich oberhalb von diesem befindliches und von diesem getragenes, feinmaschiges Gitter 53 befestigt. Die Maschenweite des letzteren liegt beispielsweise in der Größe von 0,1 mm. Die zwschen den Maschen des Gitters 53 vorhandenen Löcher dienen, wie noch erläutert wird, als Durchlaß-Öffnungen für Luft oder ein anderes Gas.

Ferner ist noch ein dritter Boden 55 vorhanden der in der Figur 4 ersichtlich ist. Dieser Boden 55 weist an einem seiner Ränder eine Rippe 55a auf, die gleich ausgebildet ist wie die Rippe 49a des Bodens 49. Der Boden 55 kann anstelle des Bodens 49 lösbar mit dem Boden 45 verbunden werden, wie es in der Figur 4 dargestellt ist. Der Boden 55 ist mit einer Öffnung 55b versehen, die ungefähr die gleiche Größe hat wie die Öffnung 17a. In die Öffnung 55b ist ein als Passier-Sieb 57 dienendes Gitter eingesetzt, dessen Maschenweite etwa 1 bis 10 mm beträgt. Die zwischen den Maschen des Passier-Siebes 57 vorhandenen Durchgangs-Öffnungen haben also eine wesentlich größere lichte Weite als die zwischen den Maschen des Gitters 53 vorhandenen Öffnungen.

Unter den beiden Führungen 43 und dem sich unter dem Behälterteil 17 befindenden Boden ist ein trichterförmiger Behälterteil 71 angeordnet, dessen Innendurchmesser am oberen Ende mindestens gleich dem Innendurchmesser der Öffnungen 49b und 55b ist und der sich gegen unten konisch verjüngt. Der Behälterteil 71 ist lösbar mit dem Behälterteil 17 und den Führungen 43 verbunden, und zwar derart, daß er dicht an den Führungen 43 und dem sich unter dem Behälterteil 17 befindenden Boden anliegt. Die Behälterteile 17 und 71 sowie die Führungen 43 sind vertikal verstellbar und werden durch nicht dargestellte, an ihnen angreifende, hydraulische Heber getragen und nach oben gedrückt. Bei der Stoß-Stelle der Behälterteile 15 und 17 ist eine Dichtung vorhanden, die eine dichte Verbindung ergibt, wenn der Behälterteil 17 durch die erwähnten Heber nach oben gedrückt wird.

Der Behälterteil 71 ist ferner mit einer seitlichen Öffnung versehen, bei der eine bewegliche Gaseinlaß-Leitung 75 angeschlossen ist. Diese ist mit einem schematisch dargestellten Gaserhitzer 77 und einem Filter 79 verbunden. Unter dem trichterförmigen Behälterteil 71 befindet sich ein verschließbarer Behälter 81 zum Aufnehmen des hergestellten Granulates oder Agglomerates.

Ferner ist noch ein Fahrgestell 83 mit einem Rahmen und vier Beinen mit je einer Laufrolle vorhanden. Das Fahrgestell 83 ist lösbar am Behälterteil 17 befestigt.

Im folgenden soll nun die Arbeitsweise der Einrichtung erläutert werden.

Für die erste Arbeitsphase wird die untere Öffnung 17a des Behälterteils 17 mit dem sich in der in den Figuren 1, 2 und 3 dargestellten Stellung befindenden, öffnungslosen Boden 45 dicht abgeschlossen. Danach wird über die Siebvorrichtung 33 und den Einlaß 31 eine vorgegebene Menge eines festen, feinkörnigen Gutes eingeführt. Dabei kann es sich beispielsweise um ein Gemisch handeln, dessen Körner aus verschiedenen Stoffen bestehen. Ferner wird durch den Einlaß 35 eine vorgegebene Menge einer Flüssigkeit oder einer Suspension mit einer flüssigen Komponente zugeführt. Die zugeführten Mengen sind dabei so bemessen, daß der Behälterteil 17 nicht ganz gefüllt wird.

Nun werden die Einlässe 31 und 35 dicht verschlossen und die sich im nun als Misch-Behälter dienenden Behälterteil 17 befindenden Komponenten mittels des Rührers 21 und des Zerhackers 23 miteinander verrührt und geknetet, so daß eine feuchte Masse gebildet wird, in der die verschiedenen Komponenten gleichmäßig verteilt sind.

Wenn dieser ohne Gaszufuhr erfolgende Mischvorgang beendet ist, werden die miteinander verbundenen Böden 45 und 49 mittels des Verstellorganes 47 entlang den Führungen 43 nach rechts verschoben, so daß die Öffnung 49b mit dem Gitter 53 unter die Öffnung 17a gelangt. Ferner werden nun das Sauggebläse 13 und der Gaserhitzer 77 in Betrieb gesetzt. Das Sauggebläse 13 saugt nun über das Filter 79 Luft an, die im Gaserhitzer 77 erwärmt wird und dann durch die Leitung 75 und die Durchlaß-Öffnungen des Gitters 53 hindurch in den Behälterteil 17 einströmt. Die Luft strömt dann durch die Behälterteile 17 und 15 nach oben. Dabei wird die sich im Behälterteil 17 befindende Masse aufgewirbelt. Der Behälterteil 17 und der untere Bereich des Behälterteils 15 bilden nun also eine Wirbelkammer. Beim Verwirbeln werden aus der feuchten Masse Granulate oder Agglomerate, d. h. Körner gebildet, die größere Abmessungen aufweisen als die Körner des durch den Einlaß 31 zugeführten Gutes. Dabei findet gleichzeitig eine Wirbelschicht-Trocknung des Mischgutes statt. Falls es zweckmäßig ist, können während der Aufwirbelung oder während eines Teils von dieser auch noch der Rührer 21 und der Zerhacker 23 in Drehung versetzt werden. Die die Aufwirbelung bewirkende Luft passiert dann das Filter 9 und strömt über die Leitung 11 und das Sauggebläse 13 aus dem Behälter 5 aus.

Wenn die sich im Behälter 17 befindende Masse in ein trockenes Granulat oder Agglomerat umgewandelt ist, werden das Sauggebläse 13 und der Gaserhitzer 77 ausgeschaltet, so daß sich alles gebildete Granulat bzw. Agglomerat im Behälterteil 17 absetzt. Ferner werden nun die Böden 45 und 49 vorübergehend so weit nach links verschoben, daß der Boden 45 die Öffnung 17a abschließt und der Boden 49 vom Boden 45 getrennt werden kann. Danach wird der Boden 55 mit dem Boden 45 verbunden, wie es in der Figur 4 ersichtlich ist. Daraufhin werden die beiden Böden 45 und 55 so weit nach rechts verschoben, daß die Öffnung 55b mit dem Passier-Sieb 57 unter die Öffnung 17a gelangt.

Wenn dies der Fall ist, kann der Rührer 21 in Drehung versetzt werden. Ein Abschnitt der Rührarme 21a gleitet dann in geringem Abstand über das Passier-Sieb 57 hinweg und ist derart ausgebildet, daß das sich im Behälterteil 17 befindende Gut über das Passier-Sieb 57 bewegt und durch dieses hindurchgedrückt wird. Das Granulat bzw. Agglomerat gelangt dann, wenn es eine entsprechende Korngröße aufweist oder durch die Rührarme auf eine solche verkleinert wurde, durch das Passier-Sieb 57 und den trichterförmigen Behälterteil 71 nach unten in den Behälter 81. Wenn dieser voll ist, kann er entfernt und durch einen leeren Behälter ersetzt werden.

Beim Betrieb der Einrichtung können also im gleichen Behälter 5 ohne Zwischentransport der zu behandelnden Güter zuerst eine Mischung trockener und flüssiger Komponenten, dann eine Verwirbelung mit Granulierung und gleichzeitiger Trocknung und schließlich noch eine Siebung durchgeführt werden. Da der Mischvorgang durch Rühren und Kneten erfolgt, findet auch dann, wenn das pulverförmige Ausgangsprodukt aus einer Mischung mit mehreren, verschiedene Dichten aufweisenden Komponenten besteht, kaum eine Fraktionierung statt. Man kann also ein Granulat oder Agglomerat erzeugen, das eine sehr gleichmäßige Zusammensetzung aufweist. Im übrigen ist es ohne weiteres möglich, verschiedene Feststoffe in den Behälterteil 17 einzubringen und diese zunächst ohne Zugabe einer Flüssigkeit miteinander zu vermischen und nötigenfalls mit dem Zerhacker 23 zu zerkleinern.

Die Maschenweite des Gitters 53 muß selbstverständlich so festgelegt werden, daß das Mischgut bei der Aufwirbelung und Granulierung nicht durch das Gitter 53 hindurchfällt. Umgekehrt ist die Maschenweite des Passier-Siebes 57 derart zu bemessen, daß das Granulat mit der gewünschten Größe durch das Passier-Sieb hindurch gelangen kann.

Wenn der Behälter 5 und die darin angeordneten Teile gereinigt werden müssen, kann man die Verbindung des Bodens 45 mit dem Verstellorgan 47 lösen. Man kann entweder alle Böden aus den Führungen 43 herausziehen oder einen der Böden unter dem Behälterteil 17 belassen. Danach können die Behälterteile 17 und 71 mitsamt den Führungen 43 durch entsprechende Betätigung der an ihnen angreifenden, hydraulischen Heber abgesenkt werden. Daraufhin kann man entweder die Leitung 75 vom Behälterteil 71 oder den letzteren vom Behälterteil 17 trennen und den Behälterteil 17 je nach dem mit oder ohne den Behälterteil 71 auf dem Fahrgestell 83 wegrollen. Der Behälter 5 und die sich darin befindlichen Teile werden dann zugänglich und können gut gereinigt werden. Nach der Reinigung können die Behälterteile 17 und 71 wieder unter den Behälterteil 15 gebracht und danach mittels der erwähnten Heber wieder in die gezeichnete Stellung angehoben werden.

In diesem Zusammenhang sei noch darauf hingewiesen, daß die Entfernbarkeit des Behälterteiles 17 ermöglicht, die zu mischenden Güter in den Behälterteil 17 einzubringen, wenn dieser von den restlichen Teilen des Behälters 5 getrennt ist. Ferner könnte man auch das erzeugte Granulat im Behälterteil 17 wegtransportieren. Der Boden 45 muß dann natürlich beim Ein- und Ausbauen der Behälterteile 17 und 71 unter dem Behälterteil 17 bleiben und mit diesem mittransportiert werden.

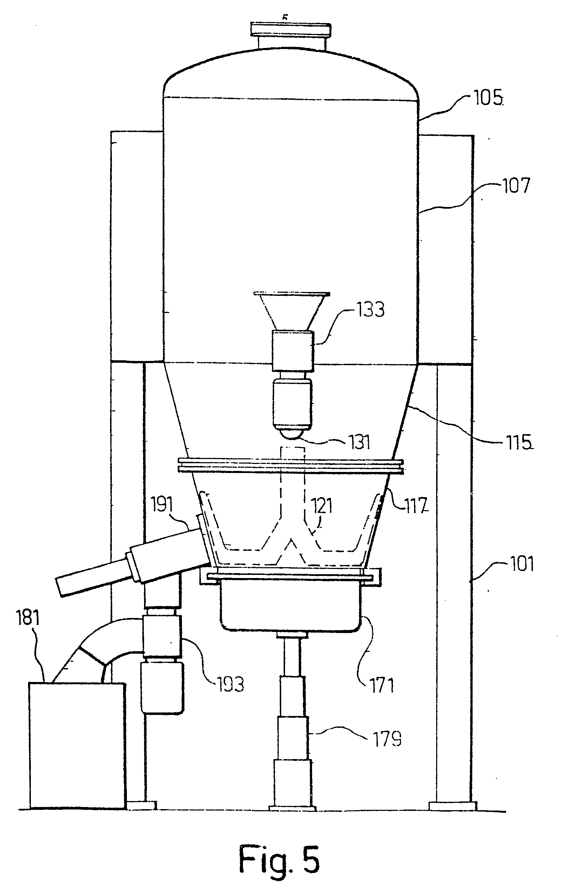

Die in der Figur 5 dargestellte Einrichtung weist ein Gestell 101 und einen Behälter 105 auf, der aus den Behälterteilen 107, 115, 117 zusammengesetzt ist. Eine Siebvorrichtung 133 ist durch einen Einlaß 131 mit dem Innenraum des Behälterteiles 115 verbunden. Im Behälter 105 ist ferner ein Rührer 121 drehbar gelagert. Ferner sind ebenfalls zwei miteinander verbundene Böden vorhanden, von denen der eine öffnungslose ist und der andere Durchlaß-Öffnungen für ein Gas aufweist. Unter dem Behälterteil 117 und dem sich gerade unter diesem befindenden Boden befindet sich eine Gaszufuhrkammer 171, an die eine bewegbare Gaszufuhr-Leitung angeschlossen ist und die durch einen hydraulischen Heber 179 nach oben gedrückt wird. die in der Figur 5 dargestellte Einrichtung ist also weitgehend ähnlich ausgebildet, wie die vorher anhand der Figuren 1, 2 und 3 beschriebenen Einrichtung.

Der wesentliche Unterschied zwischen den beiden Einrichtungen besteht darin, daß bei der in der Figur 5 dargestellten Einrichtung kein dem Boden 55 entsprechender, ein Passier-Sieb aufweisender Boden vorhanden ist. Dafür ist der sich nach unten konisch verjüngende Behälterteil 17 mit einem seitlichen, abschließbaren Auslaß 191 versehen. An diesen ist eine Siebvorrichtung 193 mit einer Sieb-Trommel und einem Motor angeschlossen. Der Ausgang der Siebvorrichtung 193 mündet in einen Behälter 181 zum Aufnehmen des gebildeten Granulates.

Der Betrieb der in der Figur 5 dargestellten Einrichtung erfolgt ebenfalls ähnlich wie bei der vorher beschriebenen Einrichtung. Der wesentliche Unterschied beim Betrieb besteht darin, daß das gebildete Granulat nicht vertikal nach unten, sondern seitlich über die Sieb-Vorrichtung 193 aus dem Behälterteil 117 entleert wird. Während des Siebvorganges wird der Rührer 121 gedreht, so daß er das Granulat nach außen zentrifugiert. Dadurch wird gewährleistet, daß alles Granulat durch den Auslaß 191 aus dem Behälterteil 117 herausgelangt.

Nun sollen noch einige weitere mögliche Varianten besprochen werden.

Zunächst sei erwähnt, daß man als Verstellorgan zum Verschieben der Böden statt eines Hydraulikzylinders beispielsweise auch einen Motor mit einem Ritzel und einer Zahnstange verwenden könnte. Des weiteren könnte man einen um eine vertikale Achse drehbaren Boden-Träger vorsehen, der zwei oder drei in einer Ebene liegende Böden trägt, die wahlweise unter dem Behälterteil gedreht werden können, in dem die Mischung und Wirbelschichtbildung erfolgt. Die Böden können in diesem Fall durch eine zusammenhängende Platte gebildet sein, die einen öffnungslosen Bereich, der den dicht schließenden Boden bildet, und eine bzw. zwei mit einem Gitter versehene Öffnungen aufweist.

Ferner wäre es aber auch möglich, Mittel vorzusehen, um die Böden übereinander anzuordnen. Beispielsweise könnte man bei der in der Figur 5 dargestellten Variante, bei der nur zwei Böden erforderlich sind, den die Öffnungen für den Durchlaß des Gases aufweisenden Boden unverschiebbar am Gestell befestigen. Der öffnungslose. dicht abschließende Boden könnte dann verschiebbar über dem die Durchlaß-Öffnungen aufweisenden Boden angeordnet werden. Man müßte dann je nach der auszuführenden Arbeitsoperation den öffnunglosen Boden zwischen über den die Öffnungen aufweisenden Boden schieben oder von diesem wegziehen.

Wenn ein Öffnungen aufweisender Boden unter einem öffnungslosen Boden angeordnet ist, kann man zudem den unteren Boden, wenn der obere die Boden-Öffnung des Behälters abschließt, in irgend einer Weise entfernen und durch einen anderen Boden ersetzen. Beispielsweise kann man in diesem Fall den Öffnungen für den Gasdurchlaß aufweisenden Boden durch den als Passier-Sieb ausgebildeten Boden ersetzen.

Falls das zu behandelnde Gut nicht in Luft verwirbelt werden darf, kann man dem Wirbelraum statt Luft selbstverständlich auch ein Schutzgas zuführen. Des weiteren kann man in diesem Fall einen geschlossenen Gas-Kreislauf vorsehen.

Bei den beschriebenen Ausführungsbeispielen erfolgt die Dichtung zwischen dem Boden und dem Behälter, wie aus der Figur 3 ersichtlich, lediglich durch aufeinander aufliegende Metallflächen. Falls die auf diese Weise erzielbare Dichtigkeit, etwa bei der Granulierung in einer Schutzgasatmosphäre, nicht ausreichen sollte, können selbstverständlich noch Dichtungen aus gummielastischem Material vorgesehen werden.

## Patentansprüche

1. Einrichtung für die Bildung von Granulaten oder Agglomeraten mit einem Behälter (5, 105) zum Mischen mindestens eines festen und mindestens eines flüssigen Gutes und zum Trocknen des daraus gebildeten Mischgutes durch Verwirbeln in einem den Behälter (5, 105) von unten nach oben durchströmenden Gas, wobei der Behälter (5, 105) einen Boden (49) mit Gas-Durchlaß-Öffnungen aufweist und im Behälter (5, 105) mindestens ein Rührer (21, 121) angeordnet ist, dadurch gekennzeichnet, daß ein zusätzlicher, entfern- oder verstellbarer Boden (45) vorhanden ist, um den Boden-Bereich des Behälters (5, 105) vorübergehend im wesentlichen dicht abzuschließen.

2. Einrichtung nach Anspruch 1, dadurch gekennzeichnet, daß der zusätzliche, im wesentlichen dicht abschließende Boden (45) verschiebbar geführt ist.

3. Einrichtung nach Anspruch 2, dadurch gekennzeichnet, daß der Boden (49) mit den Gas-Durchlaß-Öffnungen mit dem im wesentlichen dicht schließenden Boden (45) verbunden und ebenfalls verschiebbar geführt ist.

4. Einrichtung nach Anspruch 3, dadurch gekennzeichnet, daß die beiden Böden (45, 49) lösbar miteinander verbunden sind.

5. Einrichtung nach einem der Ansprüche 1 bis 4, dadurch gekennzeichnet, daß der die Gas-Durchlaß-Öffnungen aufweisende Boden (49) ebenfalls vom Boden-Bereich des Behälters (5, 105) entfernbar ist und daß noch ein dritter Boden (55) vorhanden ist, der ein Passier-Sieb (57) mit Öffnungen aufweist, die eine größere lichte Weite haben als die Gas-Durchlaß-Öffnungen des Bodens (45), der beim Verwirbeln des Mischgutes die untere Begrenzung der Wirbelkammer bildet, so daß das Mischgut nach der Verwirbelung mittels des Passier-Siebes (57) gesiebt werden kann.

6. Einrichtung nach einem der Ansprüche 1 bis 4, dadurch gekennzeichnet, daß in der Wand des Behälters (105) eine seitliche Öffnung vorhanden ist, die durch einen Auslaß (191) mit einer Siebvorrichtung (193) zum Sieben der Granulate oder Agglomerate verbunden ist.

7. Einrichtung nach einem der Ansprüche 1 bis 6, dadurch gekennzeichnet, daß eine Siebvorrichtung (33, 133) vorhanden ist, deren Ausgang mit einem in den Behälter (5, 105) mündenden Einlaß (31, 131) für die Zufuhr des festen Gutes verbunden ist.

## Claims

1. Apparatus for forming granulates or agglomerates and having a container (5, 105) for mixing at least one solid and at least one fluid material and for drying the mixture formed therefrom by causing eddying in a gas flowing upwardly through the container (5, 105) which has a bottom (49) with openings for the passage of gas and in which container (5, 105) is arranged at least one stirrer (21, 121), characterized in that an additional bottom (45), which is removable or adjustable, is present so as to temporarily close off the bottom zone of the container (5, 105) in a substantially tight manner.

2. Apparatus according to Claim 1, characterized in that the additional bottom (45), which can be closed off in a substantially tight manner, is displaceable.

3. Apparatus according to Claim 2, characterized in that the bottom (49), having the openings for the passage of gas, is connected to the bottom (45), which can be closed off in a substantially tight manner, the bottom (49) likewise being displaceable.

4. Apparatus according to Claim 3, characterized in that the two bottoms (45, 49) are releasably connected to each other.

5. Apparatus according to any one of Claims 1 to 4, characterized in that the bottom (49) having the openings for the passage of gas is likewise removable from the bottom zone of the container (5, 105), and in that a third bottom (55) is present which has a screen (57) with openings which have greater transverse dimensions than the openings for the passage of gas formed in the base (45), which constitutes the lower limit of the turbulence chamber during eddying of the mixture, so that the mixture is screened by means of the screen (57) following the eddying.

6. Apparatus according to any one of Claims 1 to 4, characterized in that the wall of the container (105) has a lateral opening which, by way of an outlet (191), is connected to a means (193) for screening the granulates or agglomerates.

7. Apparatus according to any one of Claims 1 to 6, characterized in that a screening means (33, 133) is present, the outlet of which is connected to an inlet (31, 131) for supplying the solid material, which inlet discharges into the container (5, 105).

## Revendications

1. Dispositif pour la formation de granulés ou agglomérés, comportant un récipient (5, 105) pour mélanger au moins un produit solide et au moins un produit liquide et pour sécher le mélange ainsi formé par mise en tourbillons dans un gaz traversant le récipient (5, 105) de bas en haut, le récipient (5, 105) possédant un fond (49) muni d'ouvertures pour le passage du gaz et au moins un agitateur (21, 121) étant disposé dans le récipient (5, 105), caractérisé en ce qu'il comporte un fond supplémentaire (45), susceptible d'être enlevé ou déplacé, pour obturer provisoirement de façon pratiquement étanche le bas du récipient (5, 105).

2. Dispositif selon la revendication 1, caractérisé en ce que le fond supplémentaire (45), à effet d'obturation pratiquement étanche, est guidé en translation.

3. Dispositif selon la revendication 2, caractérisé en ce que le fond (49), muni des overtures pour le passage du gaz, est relié au fond (45) à effet d'obturation pratiquement étanche et est guidé aussi en translation.

4. Dispositif selon la revendication 3, caractérisé en ce que les deux fonds (43, 49) sont reliés entre eux de façon libérable.

5. Dispositif selon l'une des revendications 1 à 4, caractérisé en ce que le fond (49), muni des ouvertures pour le passage du gaz, est agencé lui aussi pour pouvoir être enlevé du bas du récipient (5, 105) et en ce qu'il existe encore un troisième fond (55) possédant un tamis (57) dont les ouvertures ont une surface libre supérieure à celle des ouvertures de passage du gaz du fond (45) qui, lors de la mise en tourbillons mélange, constitue la limite inférieure de la chambre de tourbillonnement, de sorte que le mélange peut être tamisé à l'aide du tamis (57) après l'action des tourbillons.

6. Dispositif selon l'une des revendications 1 à 4, caractérisé en ce qu'il comporte, dans la paroi du récipient (105), une ouverture latérale qui est reliée par une sortie (191) à un dispositif de tamisage (193) destiné à tamiser les granulés ou agglomérés.

7. Dispositif selon l'une des revendications 1 à 6, caractérisé en ce qu'il comporte un dispositif de tamisage (33, 133) dont la sortie est reliée à une entrée (31, 131) débouchant dans le récipient (5, 105) et destinée à amenée du produit solide.

Fig.1

Fig. 2

Fig. 3

Fig. 4

## Fig. 5